Europäisches Patentamt

European Patent Office

Office européen des brevets

(11) Veröffentlichungsnummer : **0 349 804 B1**

(12) **EUROPÄISCHE PATENTSCHRIFT**

(19)

(45) Veröffentlichungstag der Patentschrift :
**30.09.92 Patentblatt 92/40**

(21) Anmeldenummer : **89110918.3**

(22) Anmeldetag : **16.06.89**

(51) Int. Cl.⁵ : **B05D 5/08,** C23C 28/00,
A47J 36/04

(54) **Verfahren zum Beschichten von Haus- und Küchengerätschaften mit einer Antihaftschicht.**

(30) Priorität : **08.07.88 DE 3823229**

(43) Veröffentlichungstag der Anmeldung :
**10.01.90 Patentblatt 90/02**

(45) Bekanntmachung des Hinweises auf die
Patenterteilung :
**30.09.92 Patentblatt 92/40**

(84) Benannte Vertragsstaaten :
**CH DE ES FR GB IT LI NL**

(56) Entgegenhaltungen :
**DE-A- 3 604 762**
**US-A- 4 812 367**

(56) Entgegenhaltungen :
**DERWENT ACCESSION NR. 86-254 757, Que-**
**stel Tele-systems (WPIL) DERWENT PUBLI-**
**CATIONS LTD., London**
**DERWENT ACCESSION NR. 79-065 098, Que-**
**stel Tele-systems (WPI) DERWENT PUBLICA-**
**TIONS LTD., London**

(73) Patentinhaber : **Heinzel, Winfried**
**Rosenhag 10**
**W-7758 Meersburg (DE)**

(72) Erfinder : **Heinzel, Winfried**
**Rosenhag 10**
**W-7758 Meersburg (DE)**

(74) Vertreter : **Witte, Alexander, Dr.-Ing. et al**
**Witte, Weller & Gahlert Patent- und**
**Rechtsanwälte Augustenstrasse 7**
**W-7000 Stuttgart 1 (DE)**

## Beschreibung

Die Erfindung betrifft ein Verfahren zum Beschichten von Haus- und Küchengerätschaften wie Pfannen, Töpfen, Backformen, Warmhalteplatten, Bräunungsplatten, Bügeleisen und dgl. mit einer Antihaftschicht.

Aus der DE-OS 36 04 762 ist ein Verfahren zum Beschichten von Haushaltsgegenständen, insbesondere zum Beschichten von Böden von Bratpfannen und von Gleitsohlen von Bügeleisen bekannt.

Bei dem bekannten Verfahren wird auf eine metallische Grundschicht der Bratpfanne oder des Bügeleisens zunächst im Plasmasprühverfahren eine Haftgrundschicht, insbesondere eine Nickel-Aluminium-Schicht oder eine Chrom-Nickel-Schicht aufgebracht. Alsdann wird im Plasmasprühverfahren auf die Haftgrundschicht eine Hartstoffschicht, insbesondere eine Aluminiumoxid-Schicht oder Aluminiumoxid/Titanoxid-Schicht aufgetragen. Schließlich wird die Hartstoffschicht mit einer Antihaftschicht, insbesondere auf PTFE-Basis versehen und die Antihaftschicht wird alsdann eingebrannt.

Mit dem bekannten Verfahren ist es möglich, Oberflächen zu erzeugen, die einerseits die Gleiteigenschaften der PTFE-Schicht aufweisen, andererseits aber ihre Härte derjenigen der darunterliegenden Hartstoffschicht entsprechen. Bei der Anwendung des bekannten Verfahrens für Bratpfannen entstehen somit kratz- und schnittfeste Bratflächen, während andererseits bei der Anwendung für Bügeleisensohlen Gleitflächen entstehen, mit denen auch Reißverschlüsse, Nieten und dgl. an Kleidungsstücken übergebügelt werden können, ohne daß die Gleitschicht dadurch Schaden nimmt.

Es hat sich jedoch in der Praxis gezeigt, daß für bestimmte Anwendungsfälle, auch unter Kostengesichtspunkten, alternative Verfahren erwünscht sind.

Im Langzeitgebrauch von Haus- und Küchengerätschaften, die in der beschriebenen Weise mit einer Antihaftschicht versehen sind, stellt sich beispielsweise folgendes Problem ein: Die genannten Gerätschaften haben einen metallischen Grundkörper, der beispielsweise aus Aluminium (gegossenem Aluminium) besteht.

Selbst wenn dieser metallische Grundkörper zunächst mit einer metallischen Haftvermittlerschicht versehen wird, so kann dies unter Umständen im Langzeitgebrauch nicht verhindern, daß das Metall oxidiert (ausblüht). Dieser Vorgang wird vor allem dann gefördert, wenn die Gerätschaft häufig mit aggressiven Spülmitteln behandelt wird, wie sie in modernen Geschirrspülmaschinen eingesetzt werden. Diese aggressiven Spülmittel können nämlich im Langzeitgebrauch die Antihaftschicht durchdringen und gelangen dann über die poröse Struktur der Hartstoffschicht und der Haftvermittlerschicht bis in den Bereich der metallischen Oberfläche der Gerätschaft.

Zwar ist in diesem Zusammenhang auch schon vorgeschlagen worden, zunächst den unteren Bereich der Beschichtung, d.h. die Haftvermittlerschicht ganz oder zumindest zum größten Teil und möglicherweise auch die Hartstoffschicht zumindest im unteren Bereich, zunächst durch einen extrem dünnflüssigen Lack zu versiegeln, diese Vorgehensweise wurde jedoch mehrere zusätzliche Arbeitsgänge erfordern.

Das genannte "Ausblühen" des metallischen Bodens der Gerätschaft, beispielsweise des Pfannenbodens, macht sich indes optisch störend bemerkbar.

Der Erfindung liegt daher die Aufgabe zugrunde, ein Verfahren der eingangs genannten Art anzugeben, mit dem mindestens gleich gute Oberflächeneigenschaften, verglichen mit dem vorstehend genannten Verfahren, erzielt werden können, daß jedoch aufgrund des Einsatzes anderer Werkstoffe und anderer Beschichtungsverfahren weitere Freiheiten hinsichtlich der einzusetzenden Prozesse und der aufzuwendenden Kosten ermöglicht, wobei insbesondere erreicht werden soll, daß ein Ausblühen des metallischen Grundkörpers der Gerätschaft durch Oxidation oder sonstige chemische Umsetzung verhindert wird.

Diese Aufgabe wird erfindungsgemäß durch die nachstehende Folge von Verfahrensschritten gelöst:

– Aufrauhen einer Oberfläche eines Bodens der Küchengerätschaft, insbesondere eines Aluminium-Bodens, vorzugsweise mittels Sandstrahlen;

– Beschichten des Bodens mit einer Legierungsschicht aus vorzugsweise

Nickel-Chrom-Bor-Silizium oder

Nickel-Aluminium oder

Nickel-Chrom oder

Nickel-Chrom-Hartstoff oder

Nickel-Aluminium-Hartstoff

indem das Legierungspulver in eine Brennkammer eingeblasen wird, in der ein Brenngas unter Sauerstoffzufuhr verbrannt wird, wobei das Pulver aus der Brennkammer durch eine Expansionsdüse gefördert wird und mit Überschallgeschwindigkeit als erste Schicht mit einer Dicke von vorzugsweise 30 bis 50 μm auf den Boden aufgetragen wird;

– Beschichten der ersten Schicht mit einer Hartstoffschicht aus vorzugsweise

Aluminiumoxid oder

Titanoxid oder

Aluminiumoxid und Titanoxid oder
andere derartige keramische Materialien

im Plasmasprühverfahren als zweite Schicht mit einer Dicke von vorzugsweise 20 bis 100 µm;

– Beschichten der zweiten Schicht mit einer Antihaftschicht als dritte Schicht aus vorzugsweise PTFE, in einer Menge, daß die poröse zweite Schicht vollständig getränkt wird, und Einbrennen der dritten Schicht.

Praktische Versuche haben gezeigt, daß eine auf diese Weise erzeugte Oberflächenbeschichtung hinsichtlich ihrer Schnitt- und Kratzfestigkeit bekannten Schichten zumindest ebenbürtig ist, wobei jedoch die verwendete Materialien Kostenvorteile mit sich bringen und auch die Verwendung zweier unterschiedlicher Verfahren für das Aufbringen der ersten und der zweiten Schicht zusätzliche Freiheitsgrade in der Variation der Verfahrensparameter gestatten.

Die Erfindung sei nachstehend anhand eines Ausführungsbeispiels beschrieben:

Zum Beschichten eines Bodens einer Aluminium-Bratpfanne wird zunächst der Aluminiumboden mittels Sandstrahlen aufgerauht und entfettet.

Auf den aufgerauhten Aluminiumboden wird nun eine erste Schicht aufgebracht. Hierzu wird ein Verfahren verwendet, bei dem ein Pulver, das vorzugsweise aus einer Nickellegierung besteht, in eine Brennkammer eingeblasen wird, in der ein Brenngas unter Sauerstoffzufuhr verbrannt wird. Das Pulver wird aus der Brennkammer durch eine Expansionsdüse gefördert und mit Überschallgeschwindigkeit, vorzugsweise mit 10facher Schallgeschwindigkeit auf den sandgestrahlten Aluminiumboden der Bratpfanne aufgetragen.

Das vorstehend genannte Verfahren ist in der prioritätsälteren deutschen Patentanmeldung P 38 14 122 näher beschrieben.

Infolge der extrem hohen Auftraggeschwindigkeit ergibt sich eine sehr gute Adhäsionshaftung der ersten Schicht auf dem sandgestrahlten Aluminiumboden. Die entstehende Legierungsschicht ist aufgrund der sehr hohen kinetischen Energie, mit der die Teilchen auf den Aluminiumboden auftreffen, besonders dicht und weist so gut wie keine Poren auf. Die Schicht ist daher besonders stabil gegen Schneid- und Kratzbelastung und sie wirkt als tragende Schicht für darüberliegende weitere Schichten.

Als besonders vorteilhafte Schichtdicke hat sich ein Betrag in der Größenordnung von 30 bis 50 µm erwiesen, wobei die folgenden Legierungspulver alternativ eingesetzt wurden:

Nickel-Chrom-Bor-Silizium
Nickel-Aluminium
Nickel-Chrom
Nickel-Chrom-Hartstoff
Nickel-Aluminium-Hartstoff

Die vorstehend genannten Nickellegierungen sind u.a. unter dem Markennamen "Hastelloy" im Handel; sie umfassen Nickellegierungen mit Zuschlägen von z.B. Molybdän, Chrom, Mangan, Kupfer, Silizium und Eisen in wechselnden Mengen, je nach Verwendung. Diese Legierungen bieten einen hohen Widerstand gegen hohe Temperaturen, Säuren, Chlor und Chlorverbindungen.

Unmittelbar nach dem Auftragen der ersten Schicht wird in an sich bekannter Weise mittels des Plasmasprüh-Verfahrens eine Keramikschicht aufgebracht, wobei eines der üblichen Keramikpulver wie

Aluminiumoxid oder
Titanoxid oder
Aluminiumoxid + Titanoxid

verwendet werden kann. Beim Plasmasprühen entsteht bekanntlich eine poröse Schicht mit verhältnismäßig großen Hohlräumen, die ebenfalls aufgrund Adhäsion auf der darunterliegenden ersten Schicht haftet.

Vorzugsweise wird eine Schichtdicke im Bereich zwischen 20 und 100 µ aufgetragen, wobei 30 µ bis 40 µm ein bevorzugter Bereich sind.

Im unmittelbaren Anschluß an das Aufbringen der zweiten Schicht wird dann die dritte Schicht als Antihaftschicht aufgetragen.

Hierzu wird in ebenfalls an sich bekannter Weise ein Antihaftlack, vorzugsweise ein PTFE-Lack aufgesprüht und zwar in einer Menge, daß die Poren der porösen zweiten Schicht gerade ausgefüllt werden und die Oberfläche der zweiten Schicht von einem dünnen Film der Antihaftschicht überzogen ist, nachdem diese in ebenfalls an sich bekannter Weise eingebrannt wurde.

Im Ergebnis ergibt sich auf diese Weise eine Beschichtung, bei der die Antihafteigenschaften wiederum durch die PTFE-Schicht bestimmt werden, während die Festigkeit von der relativ dünnen zweiten Schicht bestimmt wird, die jedoch deswegen besonders gut ist, weil sich die poröse zweite Schicht auf der unporösen ersten Schicht abstützen kann.

Die unporöse erste Schicht gewährleistet dabei, daß auch im Langzeitgebrauch keine aggressiven Chemikalien, z.B. Spülmittel von Geschirrspülmaschinen, in den Bereich des metallischen Grundkörpers der Gerätschaft gelangen können. Dies liegt darin, daß die unporöse erste Schicht infolge der hohen kinetischen

EP 0 349 804 B1

Energie der aufprallenden Teile des verwendeten Pulvers besonders kompakt und dicht ist, im Gegensatz zu Beschichtungen des Standes der Technik also nicht porös. Auf diese Weise wird daher das Ausblühen des metallischen Grundkörpers sicher vermieden.

Obwohl das erfindungsgemäße Verfahren vorstehend am Beispiel der Beschichtung eines Bratpfannenbodens erläutert wurde, versteht sich, daß das Verfahren auch für zahlreiche andere Anwendungen im Haus- und Küchenbereich und darüberhinaus einsetzbar ist. So können mit diesem Verfahren auch Böden von Töpfen, Backformen oder Backblechen beschichtet werden, ebenso wie Oberflächen von Warmhalteplatten und Bräunungsplatten und schließlich auch Bügeleisensohlen und andere Gegenstände, bei denen es gleichzeitig auf gute Hafteigenschaften und eine große mechanische Stabilität ankommt.

**Patentansprüche**

1.  Verfahren zum Beschichten von Haus- und Küchengerätschaften wie Pfannen, Töpfen, Backformen, Warmhalteplatten, Bräunungsplatten, Bügeleisen und dgl. mit einer Antihaftschicht, mit den Verfahrensschritten:
    – Aufrauhen einer Oberfläche eines Bodens der Küchengerätschaft, insbesondere eines Aluminiumbodens, vorzugsweise mittels Sandstrahlen;
    – Beschichten des Bodens mit einer Legierungsschicht aus vorzugsweise
        Nickel-Chrom-Bor-Silizium oder
        Nickel-Aluminium oder
        Nickel-Chrom oder
        Nickel-Chrom-Hartstoff oder
        Nickel-Aluminium-Hartstoff
    indem ein Legierungspulver in eine Brennkammer eingeblasen wird, in der ein Brenngas unter Sauerstoffzufuhr verbrannt wird, wobei das Pulver aus der Brennkammer durch eine Expansionsdüse gefördert wird und mit Überschallgeschwindigkeit als erste Schicht mit einer Dicke von vorzugsweise 30 bis 50 μm auf den Boden aufgetragen wird;
    – Beschichten der ersten Schicht mit einer Hartstoffschicht aus vorzugsweise
        Aluminiumoxid oder
        Titanoxid oder
        Aluminiumoxid + Titanoxid
    im Plasmasprühverfahren als zweite Schicht mit einer Dicke von vorzugsweise 20 bis 100 μm;
    – Beschichten der zweiten Schicht mit einer Antihaftschicht als dritte Schicht aus vorzugsweise PTFE in einer Menge, daß die poröse zweite Schicht vollständig getränkt wird, und einbrennen der dritten Schicht.

**Claims**

1.  A method for coating household and kitchen appliances, e.g. pans, pots, baking tins, warming plates, browning plates, irons etc., with an anti-adhesive coating, comprising the steps of:
    – roughening a surface of a bottom of the kitchen appliance, in particular an aluminum bottom, preferably by means of sandblasting;
    – coating the bottom with an alloy layer of preferably
        nickel-chromium-boron-silicon or
        nickel-aluminum or
        nickel-chromium or
        nickel-chromium-hardmaterial or
        nickel-aluminum-hardmaterial
    by blasting an alloy powder into a burning chamber in which a burning gas is burnt under addition of oxygen, wherein the powder is conveyed into the burning chamber by means of an expansion jet and is applied with ultra-sonic speed as a first layer with a thickness of preferably 30 - 50 μm on the bottom;
    – coating the first layer with a hardmaterial layer of, preferably,
        aluminum oxide or
        titanium oxide or
        aluminum oxide + titanium oxide
    using a plasma spray method to form a second layer with a thickness of preferably 20 - 100 μm;

4

– coating the second layer with an anti-adhesive layer as a third layer of, preferably, PTFE with a quantity such that the second porous layer is entirely soaked, and burning-in the third layer.

## Revendications

1.  Procédé d'enduction d'ustensiles ménagers et culinaires tels que des poêles, des casseroles, des moules, des plaques chauffantes, des plaques brunissantes, des fers à repasser et similaire, avec une couche anti-adhésive, selon les étapes suivantes :
    – grattage d'une surface de,fond de l'ustensile, en particulier d'un fond en aluminium, de préférence par projection de sable ;
    – enduction du fond avec une couche d'alliage composée de préférence de
    nickel-chrome-bore-silicium ou
    nickel-aluminium ou
    nickel-chrome ou
    nickel-chrome-matériau à résistance mécanique élevée ou
    nickel-aluminium-matériau à résistance mécanique élevée
    une poudre d'alliage étant insufflée dans une chambre de combustion, dans laquelle un gaz de soudage est brûlé avec alimentation en oxygène, la poudre étant conduite hors de la chambre de combustion par une buse d'expansion et appliquée sur le fond à vitesse supersonique, pour former une première couche d'une épaisseur de préférence de 30 à 50 $\mu$m ;
    – enduction de la première couche avec une couche de matériau à résistance mécanique élevée composée de préférence d'un
    oxyde d'aluminium ou
    oxyde de titane ou
    oxyde d'aluminium + oxyde de titane
    par pulvérisation de plasma pour former une deuxième couche d'une épaisseur de préférence de 20 à 100 $\mu$m ;
    – enduction de la deuxième couche avec une couche anti-adhésive, pour former une troisième couche composée de préférence de PTFE et selon une quantité telle que la deuxième couche poreuse soit entièrement absorbée, et cuisson de la troisième couche.